# EUROPEAN PATENT APPLICATION

(11) **EP 4 064 092 A1**
(43) Date of publication of application: **28.09.2022**
(21) Application number: 21194456.6
(22) Date of filing: 02.09.2021
(51) Int. Cl.: G06F 21/62, G06F 21/64, G06Q 50/18, G06F 21/31, H04L 9/32

(54) **INFORMATION PROCESSING APPARATUS, INFORMATION PROCESSING PROGRAM, AND INFORMATION PROCESSING METHOD**

(30) Priority: 22.03.2021 JP 2021047979
(71) Applicant: FUJIFILM Business Innovation Corp., Minato-ku Tokyo (JP)
(72) Inventor: TOMOKUNI, Kosuke, Yokohama-shi (JP); SAKAMOTO, Takeru, Yokohama-shi (JP); HIDA, Mitsuhiro, Yokohama-shi (JP); YAMAGUCHI, Kazumasa, Yokohama-shi (JP); KUBOTA, Takefumi, Yokohama-shi (JP)
(74) Representative: Becker, Eberhard

(57) **Abstract**

An information processing apparatus includes a processor configured to use authentication information of a first user for using an electronic signature service to acquire contract information regarding a contract of the first user being a contract requesting source for a second user being a contract requesting destination from the electronic signature service, and include extension information other than information acquirable by the second user through the electronic signature service in the acquired contract information to allow the second user to use the extension information.

## Description

### BACKGROUND OF THE INVENTION

### (i) Field of the Invention

The technique of the present invention relates to an information processing apparatus, an information processing program, and an information processing method.

### (ii) Description of Related Art

There is a technology to securely share a contract document.

JP2016-004300A discloses an electronic signature document management system that is a system that appropriately performs an electronic signature on a digitized document among a plurality of users and manages the electronic document to be viewable. The electronic signature document management system includes a plurality of terminals used by the respective users, a management apparatus, a first communication path that is encrypted and connects each of the terminals and the management apparatus to each other, and a second communication path that connects the terminals to each other and connects each of the terminals and the management apparatus to each other. A terminal of a first user transmits data of the digitized document to the management apparatus via the first communication path and transmits a notification of an address of the document in the management apparatus and a signature request to terminals of one or a plurality of second users requesting a signature, via the second communication path. The terminal of the second user receiving the request receives the data of the document via the first communication path, and transmits electronic signature data with confirming the contents of the document via the first communication path. The management apparatus stores the digitized document with the electronic signature at the address via the first communication path to be viewable.

There is a technology of retaining the originality of electronic contracts.

JP2002-099843A discloses a contact support integrated service system that uses a communication terminal, a service providing server, and a communication line connecting the server and the communication terminal to each other to certify "each act in the negotiation process of a contract", an "act of signing for contract conclusion", and a "series of history until contract conclusion" which are made on a communication system such as a communication network, and to safely stores the above acts and the history in a form of data that maintains the readability as high as paper. The contact support integrated service system includes a unit that receives a request of a company or the like that wishes to issue a "program using an encryption technology such as an electronic signature and a key of the program", and stores and issues the "program using an encryption technology such as an electronic signature and the key of the program" in a "device having a function of not allowing physical duplication of the encrypted program or data", and a unit that safely stores contract data signed or authenticated by the "program using an encryption technology such as an electronic signature and the key of the program without being tampered, in order for an in-service authentication station authority certified by a third-party authentication authority that provides a highly reliable certification service to use this service.

### SUMMARY OF THE INVENTION

In an electronic signature service, a user who is a registrant of the service can conclude a contract with a user being a contract requesting destination, as a contract requesting source. The user as the contract requesting source can use the electronic signature service to acquire, for example, contract information such as attached documents in addition to the final contract document.

On the other hand, the user as the contract requesting destination can use the electronic signature service to acquire, for example, only the final contract document. That is, the quantity of information that can be acquired is limited in comparison to the user as the contract requesting source. However, the user as the contract requesting destination may wish to acquire information other than the information acquirable from the electronic signature service.

An object of the present disclosure is to provide an information processing apparatus and an information processing program capable of allowing a user as a contract requesting destination to use information other than information acquirable by the user as the contract requesting destination through an electronic signature service.

According to a first aspect of the present disclosure, there is provided an information processing apparatus including a processor configured to use authentication information of a first user for using an electronic signature service to acquire contract information regarding a contract of the first user being a contract requesting source for a second user being a contract requesting destination from the electronic signature service, and include extension information other than information acquirable by the second user through the electronic signature service in the acquired contract information to allow the second user to use the extension information.

According to a second aspect, in the information processing apparatus according to the first aspect, the processor may be configured to accumulate the acquired contract information, and include the extension information in the accumulated contract information to allow the second user to use the extension information.

According to a third aspect, in the information processing apparatus according to the second aspect, the processor may be configured to use authentication information of a third user being a contract requesting source of another contract to further acquire contract information regarding a contract of the third user for the second user, from the electronic signature service, and include the extension information in the contract information in which the first user or the third user is set as the contract requesting source, to allow the second user to use the extension information.

According to a fourth aspect, in the information processing apparatus according to any one of the first to third aspects, the processor may be configured to allow the second user to use the extension information in a range designated by the first user.

According to a fifth aspect, in the information processing apparatus according to any one of the first to fourth aspects, the processor may be configured to authenticate a user with identification information, and enable use of extension information of contract information in which the identification information used in the authentication is included as identification information of the second user.

According to a sixth aspect, in the information processing apparatus according to the fifth aspect, the identification information may be an E-mail address of the user, and the processor may be configured to enable use of extension information of contract information in which the E-mail address is included as an E-mail address of the second user.

According to a seventh aspect, in the information processing apparatus according to the sixth aspect, the processor is configured to allow a user having an E-mail address having a domain identical to a domain of the E-mail address of the second user to use the extension information.

According to an eighth aspect of the present disclosure, there is provided an information processing program causing a computer to execute a process including using authentication information of a first user for using an electronic signature service to acquire contract information regarding a contract of the first user being a contract requesting source for a second user being a contract requesting destination from the electronic signature service, and including extension information other than information acquirable by the second user through the electronic signature service in the acquired contract information to allow the second user to use the extension information.

According to a ninth aspect of the present disclosure, there is provided an information processing method including using authentication information of a first user for using an electronic signature service to acquire contract information regarding a contract of the first user being a contract requesting source for a second user being a contract requesting destination from the electronic signature service, and including extension information other than information acquirable by the second user through the electronic signature service in the acquired contract information to allow the second user to use the extension information.

According to the first aspect, the eighth aspect, and the ninth aspect, it is possible to allow the second user to use extension information other than information acquirable by the second user through the electronic signature service.

According to the second aspect, even in a case where using the authentication information of the first user is not possible, it is possible to continuously allow the second user to use the extension information.

According to the third aspect, it is possible to allow the second user to use extension information of a contract with a user other than the first user.

According to the fourth aspect, it is possible to cause the first user to limit the extension information allowed to be used by the second user.

According to the fifth aspect, it is possible to allow a user specified by identification information included in contract information to use the extension information.

According to the sixth aspect, it is possible to allow a user having an E-mail address included in the contract information to use the extension information.

According to the seventh aspect, it is possible to share the extension information between users having an identical domain.

### BRIEF DESCRIPTION OF THE DRAWINGS

Exemplary embodiment(s) of the present invention will be described in detail based on the following figures, wherein:
Fig. 1 is a schematic diagram illustrating an electronic signature service;
Fig. 2 is a diagram illustrating a system configuration of a contract management system according to a first exemplary embodiment;
Fig. 3 is a schematic diagram illustrating the contract management system according to the first exemplary embodiment;
Fig. 4 is a block diagram illustrating a hardware configuration of a contract management apparatus according to the first exemplary embodiment;
Fig. 5 is a sequence diagram illustrating a flow of a contract management process of the contract management system according to the first exemplary embodiment;
Fig. 6 is a sequence diagram illustrating the flow of the contract management process of the contract management system according to the first exemplary embodiment;
Fig. 7 is a flowchart illustrating a flow of a process of acquiring contract information and the like in response to a contract request for the contract management apparatus according to the first exemplary embodiment;
Fig. 8 is a flowchart illustrating a flow of a process of acquiring the contract information and the like in response to a notification of completion of signing of the contract management apparatus according to the first exemplary embodiment;
Fig. 9 is a flowchart illustrating a flow of a process of periodically acquiring the contract information and the like of the contract management apparatus according to the first exemplary embodiment;
Fig. 10 is a flowchart illustrating a flow of a process of creating extension information of the contract management apparatus according to the first exemplary embodiment;
Fig. 11 is a flowchart illustrating a flow of a process of allowing use of the extension information of the contract management apparatus according to the first exemplary embodiment;
Fig. 12 is a diagram illustrating an example of a common table used for contract management of the contract management apparatus according to the first exemplary embodiment;
Fig. 13 is a diagram illustrating an example of an item sharing table used for the contract management of the contract management apparatus according to the first exemplary embodiment;
Fig. 14 is a diagram illustrating an example of an extension information view used for the contract management of the contract management apparatus according to the first exemplary embodiment;
Fig. 15 is a diagram illustrating the example of the extension information view used for the contract management of the contract management apparatus according to the first exemplary embodiment;
Fig. 16 is a flowchart illustrating a flow of a process of displaying extension information of a contract management apparatus according to a second exemplary embodiment;
Fig. 17 is a diagram illustrating an example of a tenant table used for the contract management of the contract management apparatus according to the second exemplary embodiment;
Fig. 18 is a diagram illustrating an example of a user table used for contract management of the contract management apparatus according to the second exemplary embodiment;
Fig. 19 is a diagram illustrating an example of a tenant contract table used for the contract management of the contract management apparatus according to the second exemplary embodiment;
Fig. 20 is a diagram illustrating an example of an extension information display screen 100 of the contract management apparatus according to the second exemplary embodiment;
Fig. 21 is a diagram illustrating another example of the extension information display screen 100 of the contract management apparatus according to the second exemplary embodiment;
Fig. 22 is a diagram illustrating still another example of the extension information display screen 100 of the contract management apparatus according to the second exemplary embodiment;
Fig. 23 is a diagram illustrating another example of the tenant table used for the contract management of the contract management apparatus according to the second exemplary embodiment; and
Fig. 24 is a schematic diagram illustrating a flow of a process of acquiring the contract information and the like from a URL of the contract management apparatus according to the present disclosure.

### DETAILED DESCRIPTION OF THE INVENTION

Hereinafter, exemplary embodiments of the present invention will be described in detail with reference to the drawings. The identical reference signs are denoted by the same or equivalent components and portions in the drawings. In addition, the dimensional ratios in the drawings are exaggerated for convenience of description and may differ from the actual ratios.

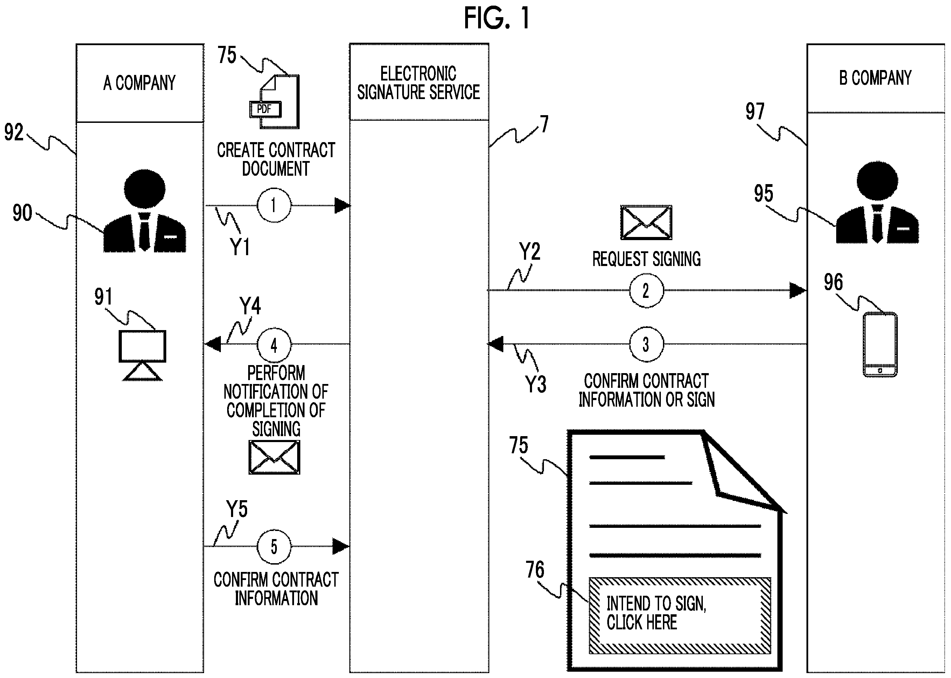

Fig. 1 is a schematic diagram illustrating an electronic signature service 7.

The electronic signature service 7 is a service that realizes the conclusion of a contract between a first user 90 being a contract requesting source and a second user 95 being a contract requesting destination, by electronic signature.

Here, the first user 90 belongs to a company A 92 being a tenant. The first user 90 registers and uses the electronic signature service 7 by using a terminal device 91. The terminal device 91 is, for example, a terminal such as a smartphone, a tablet, and a personal computer. The first user 90 is registered in the electronic signature service 7.

The second user 95 belongs to a company B 97 being a tenant. The second user 95 uses the electronic signature service 7 by using a terminal device 96. The terminal device 96 is, for example, a terminal such as a smartphone, a tablet, and a personal computer. The second user 95 may or may not be registered the electronic signature service 7.

A flow in which the first user 90 requests a contract from the second user 95 by using the electronic signature service 7 will be described in order of processes indicated by arrows Y1 to Y5.

The arrow Y1 indicates a flow in which the first user 90 creates a contract document 75 on the electronic signature service 7 by using the terminal device 91. The electronic signature service 7 provides a contract-document creation function to the first user 90 on a WEB screen, for example. The first user 90 creates the contract document 75 by the contract-document creation function provided by the electronic signature service 7. The first user 90 writes an E-mail address of the second user 95 as the contract requesting destination, on the electronic signature service 7. Here, the contract document 75 is, for example, text data or data stored in a portable document format (PDF) format or the like.

The arrow Y2 indicates a flow of a process in which the electronic signature service 7 requests the second user 95 to sign by E-mail. The electronic signature service 7 transmits, for example, an E-mail in which a uniform resource locator (URL) of a WEB site for confirming the contract document 75 and signing is described. The electronic signature service 7 adds meta information such as a signature region 76 to the contract document 75.

The arrow Y3 indicates a flow in which the second user 95 confirms the contract document 75 or signs on the contract document on the electronic signature service 7 by using the terminal device 96. The second user 95 signs on the signature region 76 assigned to the contract document 75, for example. Then, the electronic signature service 7 performs the electronic signature using the signature.

The arrow Y4 indicates a flow of a process in which the electronic signature service 7 notifies the first user 90 of the completion of signing by E-mail. Similarly, the electronic signature service 7 also notifies the second user 95 of the completion of the signing (not illustrated in Fig. 1) .

The arrow Y5 indicates a process in which the first user 90 confirms contract information on the electronic signature service 7 by using the terminal device 91. Here, the contract information is information regarding the contract and includes one or a plurality of items . The contract information includes, for example, the contract status, the contract requesting source, the contract requesting destination, the contract date, the contract expiration, the contract document, or contract-document meta information of the contract. Here, the contract status indicates the conclusion status of the contract. The contract status is, for example, being unrequested, contract-in-progress, or being contracted. The contract-document meta information is information attached to the contract document. The contract-document meta information is, for example, PDF meta information that can be edited before conclusion of a contract, such as the signature region 76, an input box of the amount of money, or a consent check box.

As described above, the electronic signature service 7 provides the first user 90 with the management function including a contract information confirmation function. The management function includes, for example, a function of allowing use of contract information, a function of confirming the previous contract, and a function of renewing the contract. Here, the function of allowing use refers to transmission of information to the user, or causing the information to be in a viewable state or a downloadable state.

On the other hand, the electronic signature service 7 does not provide the second user 95 with the management function. Alternatively, the electronic signature service 7 provides the second user with the management function limited as compared with the first user 90.

For example, the electronic signature service 7 allows the first user 90 to use the contract-document meta information before and after the signing. On the other hand, the electronic signature service 7 does not allow the second user 95 to use the contract-document meta information before and after the signing.

For example, the electronic signature service 7 allows the first user 90 to use contract information of the previous contract with the second user 95. On the other hand, the electronic signature service 7 does not allow the second user 95 to use contract information of the previous contract with the first user 90.

### [First Exemplary Embodiment]

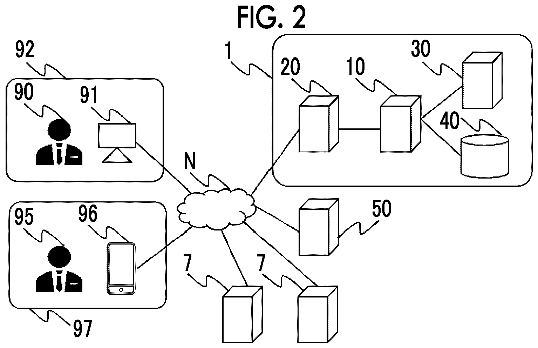

Fig. 2 is a diagram illustrating a system configuration of a contract management system 1 according to a first exemplary embodiment.

The contract management system 1 is a system that acquires contract information or service information from one or a plurality of electronic signature services 7 and centrally manages the acquired pieces of information. The service information is information regarding the electronic signature service 7. The service information is, for example, the remaining number of usages, which is the number of times that a contract can be requested on the electronic signature service 7, whether or not the electronic signature service is registered, and the expiration date of the authentication information. In the following description, the contract information and the service information will be referred to as "contract information and the like".

Here, the contract management system 1 is configured by a contract management apparatus 10, a WEB server 20, a contract document storage 30, and a contract management database 40.

The contract management apparatus 10 acquires contract information and the like from the electronic signature service 7, and creates extension information. Here, the extension information is information other than information acquirable by the second user 95 through the electronic signature service 7 among pieces of the contract information acquired from the electronic signature service 7. The extension information includes information created based on contract information and the like. For example, the contract management apparatus 10 creates information on the number of contracts between the first user 90 and the second user 95 from the previous contracts between the first user 90 and the second user 95, as the extension information. The extension information is, for example, contract-document meta information, flag information indicating that the current contract is related to the previous contract, and related contract document data. The contract management apparatus 10 operates as the information processing apparatus in the present disclosure.

The WEB server 20 is a server that transmits and receives to and from a WEB browser or the like by the hypertext transfer protocol (HTTP). The WEB server 20 receives an HTTP request transmitted from the WEB browser installed on the terminal device 96, for example. The WEB server 20 transmits information on the received HTTP request to the contract management apparatus 10.

The contract document storage 30 is a storage that stores files such as the contract document 75. A file is transmitted in response to a request from the contract management apparatus 10 or the like.

The contract management database 40 is a database that stores information used for contract management.

The contract management system 1, the mail server 50, the electronic signature service 7, the company A 92, and the company B 97 are connected to a network N.

The mail server 50 is a mail server that transmits and receives E-mails.

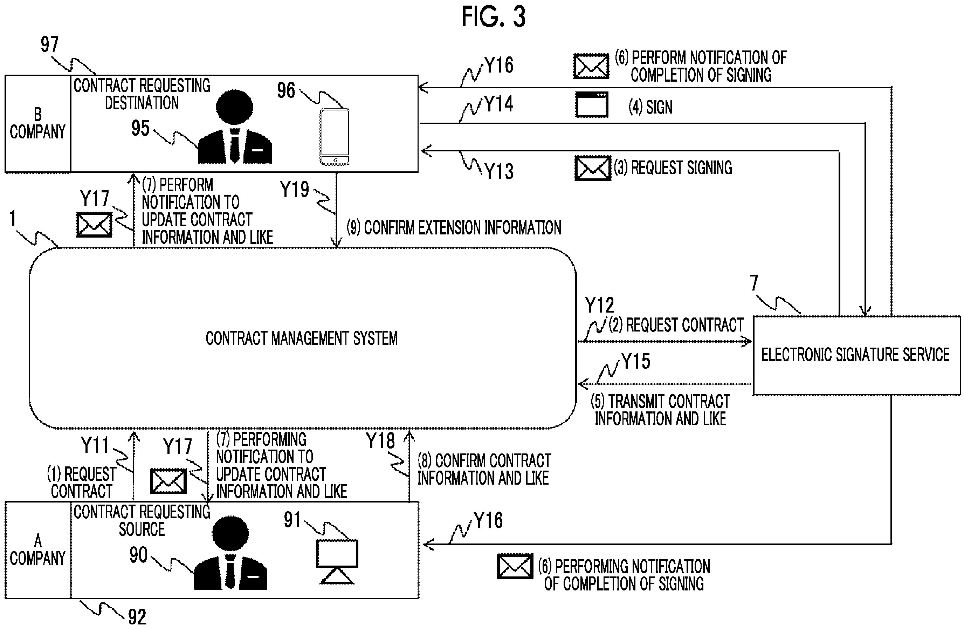

Fig. 3 is a schematic diagram illustrating the contract management system 1 according to the first exemplary embodiment.

A flow in which the first user 90 requests a contract from the second user 95 by using the contract management system 1 will be described in order of processes indicated by arrows Y11 to Y19.

The arrow Y11 indicates a flow in which the first user 90 requests a contract with the second user 95 from the contract management system 1 by using the terminal device 91.

The arrow Y12 indicates a flow of a process in which the contract management system 1 requests the contract from the electronic signature service 7. Here, in a case where the electronic signature service 7 opens an application programming interface (API) to the public, the contract management system 1 requests the contract from the electronic signature service 7 by using the API. The electronic signature service 7 executes the API using the authentication information of the first user 90. Here, the authentication information is authentication information for using the electronic signature service. The authentication information is, for example, a password or an authentication key for using the API of the electronic signature service 7. The contract management apparatus 10 stores the authentication information of the first user 90 in the contract management database 40 in advance.

The arrow Y13 indicates a flow of a process in which the electronic signature service 7 requests the second user 95 to sign.

The arrow Y14 indicates a flow of a process in which the second user 95 signs on the electronic signature service 7.

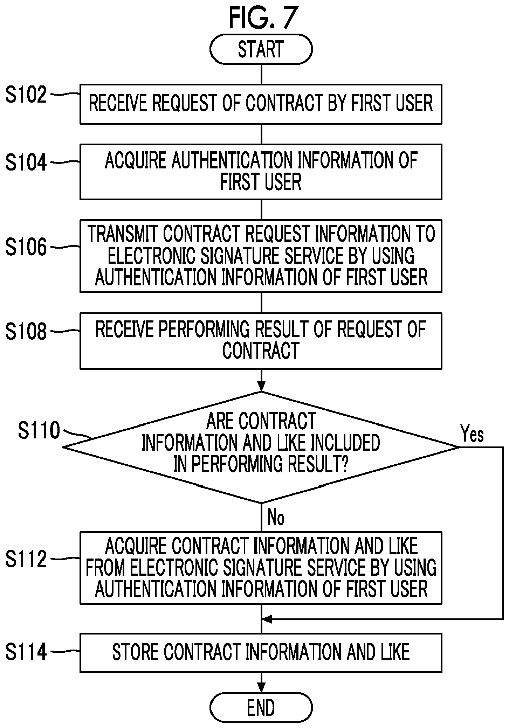

The arrow Y15 indicates a flow of a process in which the electronic signature service 7 transmits contract information and the like to the contract management system 1. That is, the contract management system 1 acquires the contract information and the like from the electronic signature service 7. In a case where the electronic signature service 7 opens the API to the public, the contract management system 1 uses the API to acquire the contract information and the like from the electronic signature service 7. The process of acquiring the contract information and the like will be described later with reference to Figs. 7, 8, and 9.

The arrow Y16 indicates a flow of a process in which the electronic signature service 7 notifies the first user 90 and the second user 95 of the completion of the signing.

The arrow Y17 indicates a flow of a process in which the contract management system 1 notifies the first user 90 and the second user 95 of the update of the contract information and the like. The update of the contract information and the like is the update of the contract status by signing of the second user 95, for example.

The arrow Y18 indicates a flow in which the first user 90 confirms the contract information and the like on the contract management system 1 by using the terminal device 91.

The arrow Y19 indicates a flow in which the second user 95 confirms the extension information on the contract management system 1 by using the terminal device 96.

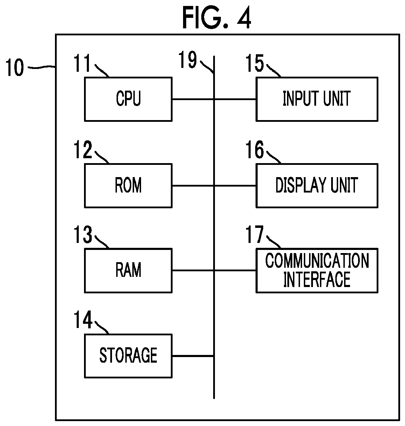

Fig. 4 is a block diagram illustrating a hardware configuration of the contract management apparatus 10 according to the first exemplary embodiment. The contract management apparatus 10 includes components such as a central processing unit (CPU) 11, a read only memory (ROM) 12, a random access memory (RAM) 13, a storage 14, an input unit 15, a display unit 16, and a communication interface (communication I/F) 17. The components are connected to each other via a bus 19 to be communicable with each other.

The CPU 11 is a central arithmetic processing unit that executes various programs and controls the units. That is, the CPU 11 reads the program from the ROM 12 or the storage 14, and executes the program using the RAM 13 as a work area. The CPU 11 controls the above components and performs various arithmetic processes, in accordance with the program recorded in the ROM 12 or the storage 14. In the first exemplary embodiment, an information processing program for managing a contract is stored in the ROM 12 or the storage 14. A contract management processing program will be described later with reference to Figs. 7, 8, 9, 10, 11, and 16.

The ROM 12 stores various programs and various types of data. The RAM 13 temporarily stores the program or the data as a work area. The storage 14 is configured by a hard disk drive (HDD) or a solid state drive (SSD), and stores various programs including an operating system and various types of data.

The input unit 15 includes a pointing device such as a mouse, and a keyboard, and the input unit is used for performing various inputs.

The display unit 16 is, for example, a liquid crystal display and displays various types of information. The display unit 16 may adopt a touch panel type and function as the input unit 15.

The communication interface 17 is an interface for communicating with other devices such as a database. For example, standards such as Ethernet (registered trademark), FDDI, and Wi-Fi (registered trademark) are used for the communication interface.

Next, the operation of the contract management system 1 will be described.

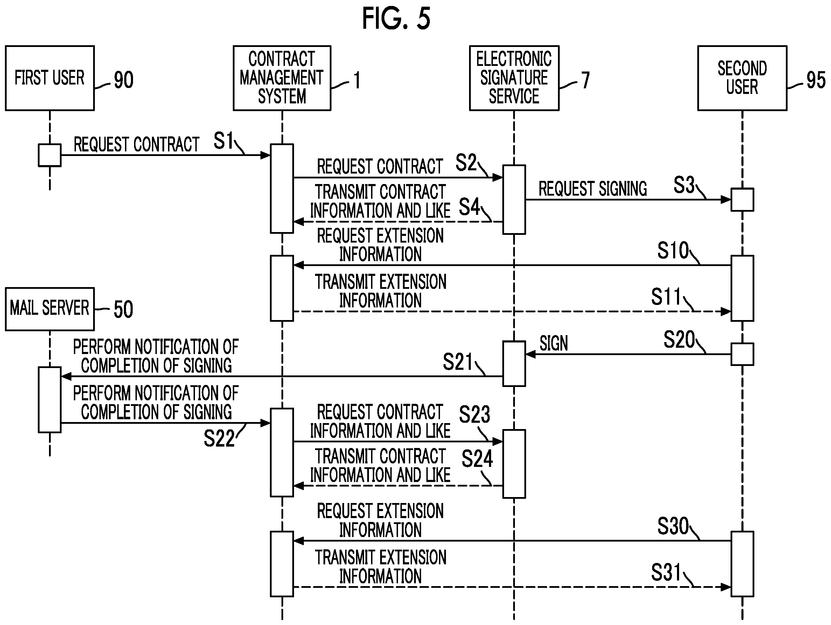

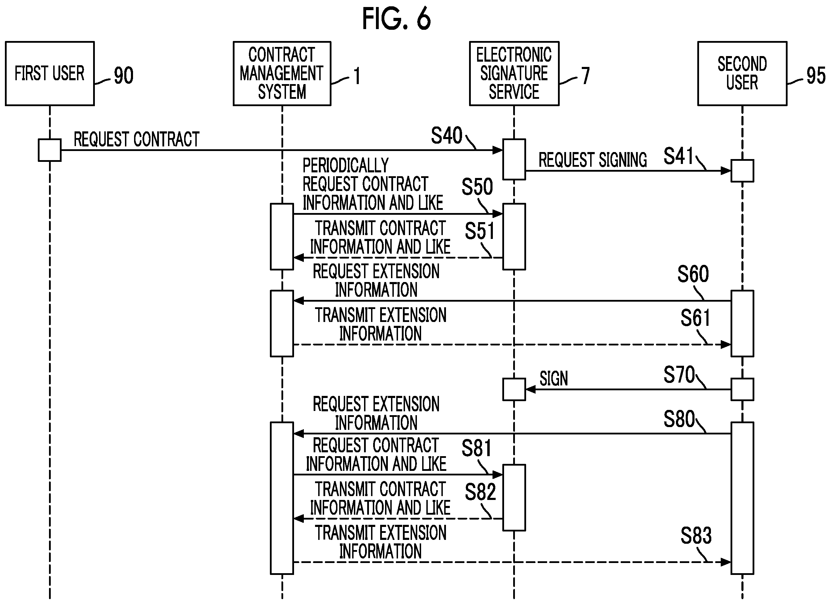

Figs. 5 and 6 are sequence diagrams illustrating a flow of a contract management process of the contract management system 1 according to the first exemplary embodiment.

Fig. 5 illustrates a process of the first user 90, the contract management system 1, the electronic signature service 7, the second user 95, and the mail server 50.

In Step S1, the first user 90 requests a contract from the contract management system 1. Step S1 corresponds to Step S102 in Fig. 7, which will be described later.

In Step S2, the contract management system 1 requests the contract from the electronic signature service 7. Step S2 corresponds to Step S106 in Fig. 7, which will be described later.

In Step S3, the electronic signature service 7 requests the second user 95 to sign.

In Step S4, the electronic signature service 7 transmits the contract information and the like to the contract management system 1. Step S4 corresponds to Step S108 or Step S112 in Fig. 7, which will be described later.

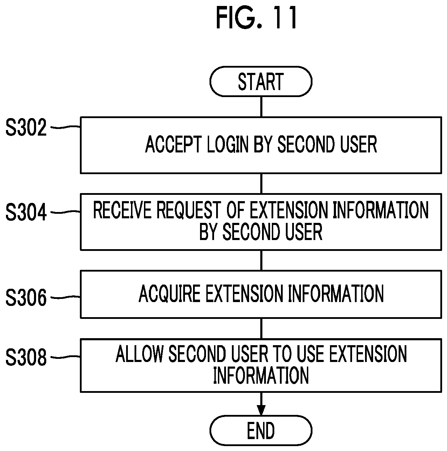

In Step S10, the second user 95 requests extension information from the contract management system 1. Step S10 corresponds to Step S304 in Fig. 11, which will be described later.

In Step S11, the contract management system 1 transmits the extension information to the second user 95. Step S10 corresponds to Step S308 in Fig. 11, which will be described later.

In Step S20, the second user 95 signs on the electronic signature service 7.

In Step S21, the electronic signature service 7 notifies the mail server 50 of the completion of the signing. That is, the electronic signature service 7 transmits an E-mail to notify the first user 90 and the second user 95 of the completion of the signing.

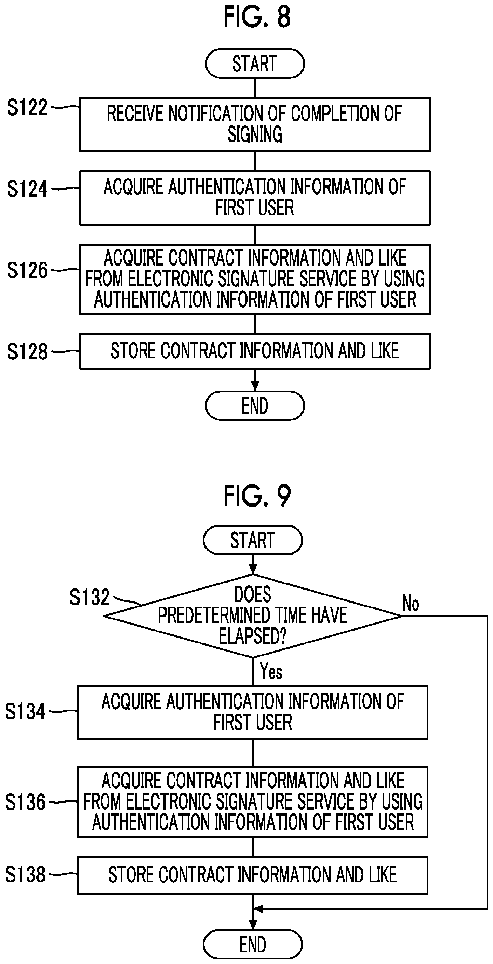

In Step S22, the mail server 50 notifies the contract management system 1 of the completion of the signing. The contract management system 1 acquires, for example, an E-mail from the electronic signature service 7 to the first user 90 or the second user 95 by the post office protocol (POP) or the Internet message access protocol (IMAP). The contract management system 1 may acquire, for example, POP authentication information of the first user 90 or the second user 95 in advance. The first user 90 or the second user 95 may transfer the E-mail to the contract management system 1 instead of the mail server 50. Step S22 corresponds to Step S122 in Fig. 8, which will be described later.

In Step S23, the contract management system 1 requests the contract information and the like from the electronic signature service 7.

In Step S24, the electronic signature service 7 transmits the contract information and the like to the contract management system 1. Steps S23 and S24 correspond to Step S126 in Fig. 8, which will be described later.

In Step S30, the second user 95 requests the extension information from the contract management system 1. Step S30 corresponds to Step S304 in Fig. 11, which will be described later.

In Step S31, the contract management system 1 transmits the extension information to the second user 95. Step S31 corresponds to Step S308 in Fig. 11, which will be described later.

Fig. 6 is a sequence diagram illustrating the flow of the contract management process of the contract management system 1 in a case of requesting a contract from the electronic signature service 7 and in a case of not using the mail server 50. Fig. 6 illustrates a process of the first user 90, the contract management system 1, the electronic signature service 7, and the second user 95.

In Step S40, the first user 90 requests a contract from the electronic signature service 7 requests the second user 95.

In Step S41, the electronic signature service 7 requests the second user 95 to sign.

In Step S50, the contract management system 1 periodically requests the contract information and the like from the electronic signature service 7.

In Step S51, the electronic signature service 7 transmits the contract information and the like to the contract management system 1. Steps S50 and S51 correspond to Steps S132 to S136 in Fig. 9, which will be described later.

In Step S60, the second user 95 requests the extension information from the contract management system 1. Step S60 corresponds to Step S304 in Fig. 11, which will be described later.

In Step S61, the contract management system 1 transmits the extension information to the second user 95. Step S61 corresponds to Step S308 in Fig. 11, which will be described later.

In Step S70, the second user 95 signs on the electronic signature service 7.

In Step S80, the second user 95 requests the extension information from the contract management system 1. Step S80 corresponds to Step S304 in Fig. 11, which will be described later.

In Step S81, the contract management system 1 requests the contract information and the like from the electronic signature service 7. That is, the contract management system 1 requests the contract information and the like in response to the request of the extension information by the second user 95.

In Step S82, the electronic signature service 7 transmits the contract information and the like to the contract management system 1.

In Step S83, the contract management system 1 transmits the extension information to the second user 95. Step S83 corresponds to Step S308 in Fig. 11, which will be described later.

Next, the operation of the contract management apparatus 10 will be described.

Fig. 7 is a flowchart illustrating a flow of a process of acquiring contract information and the like in response to a contract request by the contract management apparatus 10 according to the first exemplary embodiment. The CPU 11 reads a processing program for acquiring contract information and the like from the ROM 12 or the storage 14 in response to a request of a contract, and expands the program into the RAM 13 and executes the program. In this manner, the process of acquiring the contract information and the like in response to the request of a contract is performed.

In Step S102, the CPU 11 receives the request of the contract by the first user 90. The CPU 11 causes the process to proceed to Step S104.

In Step S104, the CPU 11 acquires the authentication information of the first user 90. That is, the CPU 11 acquires the authentication information of the first user 90, which is stored in advance in the contract management database 40. The CPU 11 causes the process to proceed to Step S106.

In Step S106, the CPU 11 transmits contract request information to the electronic signature service 7 by using the authentication information of the first user 90. The contract request information is information for causing the electronic signature service 7 to perform a contract request process. That is, the CPU 11 causes the electronic signature service 7 to perform the contract request processing by using the API. The CPU 11 causes the process to proceed to Step S108.

In Step S108, the CPU 11 receives the performing result of the request of the contract. The CPU 11 causes the process to proceed to Step S110. Here, the performing result is a response to a request using API.

In Step S110, the CPU 11 determines whether or not the performing result includes contract information and the like. In a case where it is determined that the performing result does not include the contract information and the like (Step S110: No), the CPU 11 causes the process to proceed to Step S112. In a case where it is determined that the performing result includes the contract information and the like (Step S110: Yes), the CPU 11 causes the process to proceed to Step S114.

In Step S112, the CPU 11 acquires the contract information and the like from the electronic signature service 7 by using the authentication information of the first user 90. That is, the CPU 11 acquires the contract information from the first user 90 for the second user 95 being the contract requesting destination, by using the authentication information of the first user 90. The CPU 11 may acquire one or a plurality of contract information in which the first user 90 is the contract requesting source or the contract requesting destination, by using the authentication information of the first user 90. The CPU 11 causes the process to proceed to Step S114.

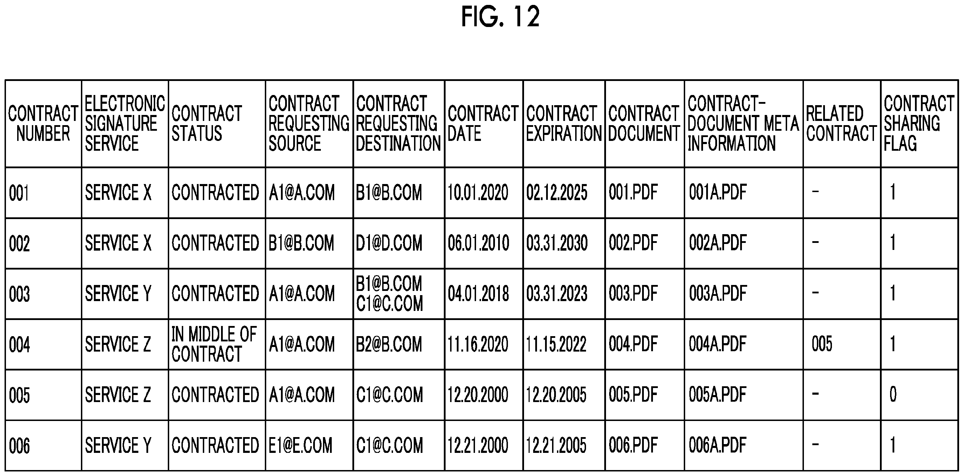

In Step S114, the CPU 11 stores the contract information and the like. That is, the CPU 11 stores the contract information and the like in the contract management database 40. The CPU 11 stores the contract information and the like in a common table of the contract management database 40. The common table will be described later in Fig. 12. The CPU 11 ends the process of acquiring the contract information and the like in response to the request of the contract.

The processes of Steps S102 to S114 are performed by using the authentication information of a user other than the first user 90. In this manner, the contract information and the like of the user other than the first user 90 are accumulated in the contract management database 40. This is similarly applied to Steps S122 to S128 in Fig. 8 and Steps S132 to S138 in Fig. 9.

Fig. 8 is a flowchart illustrating a flow of the process of acquiring the contract information and the like in response to a notification of completion of signing by the contract management apparatus 10 according to the first exemplary embodiment. The CPU 11 reads a processing program for acquiring contract information and the like from the ROM 12 or the storage 14 in response to the notification of the completion of the signing. Then, the CPU 11 expands the program into the RAM 13 and performs the program. In this manner, the process of acquiring the contract information and the like in response to the notification of completion of signing is performed.

In Step S122, the CPU 11 receives the notification of completion of signing. The CPU 11 causes the process to proceed to Step S124. The CPU 11 receives, for example, the notification of completion of signing by E-mail indicated by the arrow Y16 in Fig. 3, from the mail server 50 by the POP or the like.

In Step S124, the CPU 11 acquires the authentication information of the first user 90. The CPU 11 causes the process to proceed to Step S126.

In Step S126, the CPU 11 acquires the contract information and the like from the electronic signature service 7 by using the authentication information of the first user 90. The CPU 11 causes the process to proceed to Step S128.

In Step S128, the CPU 11 stores the contract information and the like. The CPU 11 ends the process of acquiring the contract information and the like in response to the notification of completion of signing.

Fig. 9 is a flowchart illustrating a flow of a process of periodically acquiring the contract information and the like by the contract management apparatus 10 according to the first exemplary embodiment. The CPU 11 reads a processing program for periodically acquiring the contract information and the like from the ROM 12 or the storage 14, and expands the program into the RAM 13 and executes the program. In this manner, the process of periodically acquiring the contract information and the like is performed.

In Step S132, the CPU 11 determines whether or not a predetermined time has elapsed. In a case where it is determined that the predetermined time has elapsed (Step S132: Yes), the CPU 11 causes the process to proceed to Step S134. In a case where it is determined that the predetermined time does not have elapsed (Step S132: No), the CPU 11 ends the process of periodically acquiring the contract information and the like. The predetermined time is, for example, one hour.

In Step S134, the CPU 11 acquires the authentication information of the first user 90. The CPU 11 causes the process to proceed to Step S136.

In Step S136, the CPU 11 acquires the contract information and the like from the electronic signature service 7 by using the authentication information of the first user 90. The CPU 11 causes the process to proceed to Step S138.

In Step S138, the CPU 11 stores the contract information and the like. The CPU 11 ends the process of periodically acquiring the contract information and the like.

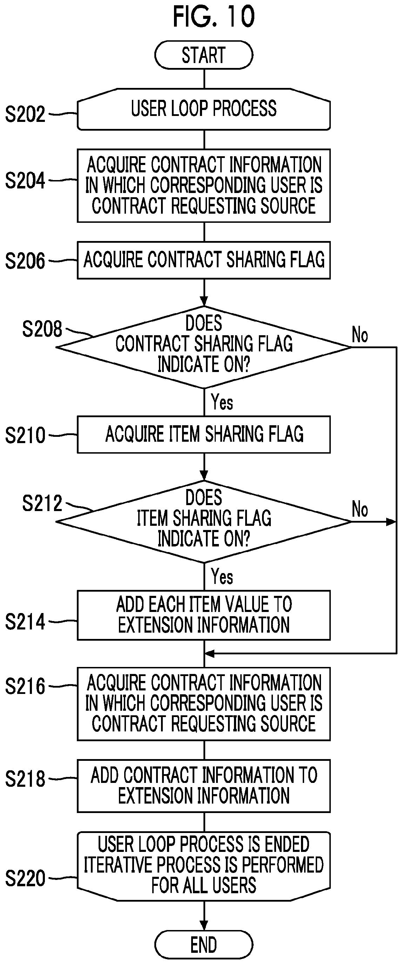

Fig. 10 is a flowchart illustrating a flow of a process of creating extension information by the contract management apparatus 10 according to the first exemplary embodiment. The CPU 11 reads a processing program for creating extension information from the ROM 12 or the storage 14, and expands the program into the RAM 13, and thus the process of creating the extension information is performed.

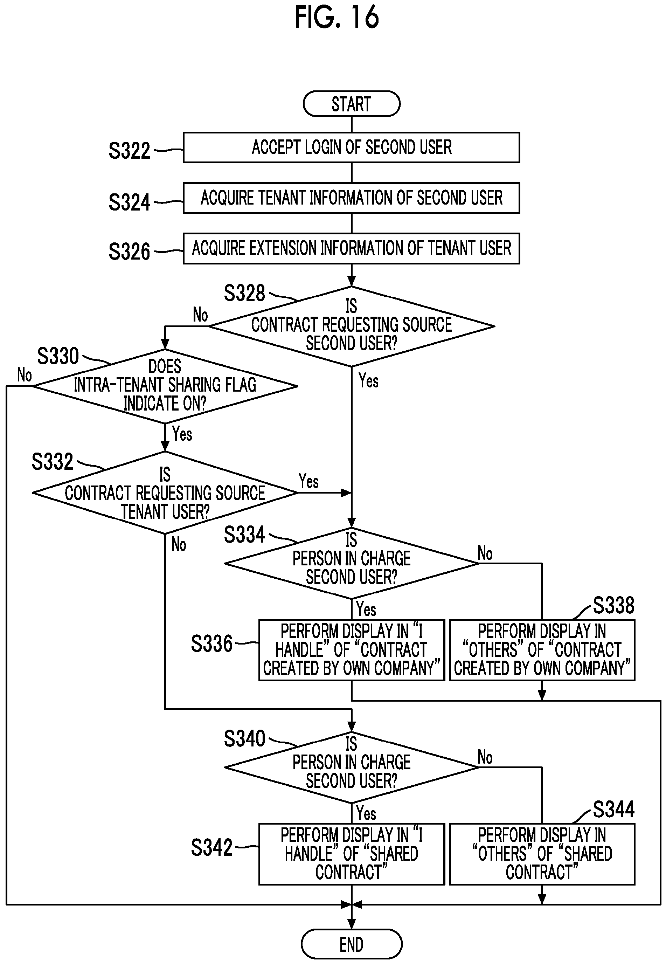

The contract management apparatus 10 creates the extension information in a case where the contract information and the like are stored, the extension information is requested, or the login by the user is accepted. The case where the contract information and the like are stored is a case where the process of Step S114 in Fig. 7, Step S128 in Fig. 8 or Step S138 in Fig. 9 is performed. The case where the extension information is requested is a case where the process of Step S304 in Fig. 11 is performed. The case where the login is accepted is a case where the process of Step S302 in Fig. 11 or Step S322 in Fig. 16 is performed.

In Step S202, the CPU 11 starts a user loop process. The user loop process is an iterative process of performing processing for each user. The user is the contract requesting source or the contract requesting destination of contract information. In the following description, the user in the middle of the iterative process is referred to as "the user". The CPU 11 causes the process to proceed to Step S204. The determination of ending the user loop process is performed in Step S220 which will be described later.

In Step S204, the CPU 11 acquires the contract information in which the user is the contract requesting destination. The CPU 11 causes the process to proceed to Step S206.

In Step S206, the CPU 11 acquires a contract sharing flag. The CPU 11 causes the process to proceed to Step S208. Here, the contract sharing flag is a flag for determining whether or not to share the contract information with the contract requesting destination. The contract sharing flag is a flag that can be set by the contract requesting source. A specific example of the contract sharing flag will be described later in Fig. 12. In the present disclosure, in the flag, 0 is set to OFF, and 1 is set to ON.

In Step S208, the CPU 11 determines whether or not the contract sharing flag indicates ON. In a case where it is determined that the contract sharing flag indicates ON (Step S208: Yes), the CPU 11 causes the process to proceed to Step S210. In a case where it is determined that the contract sharing flag indicates OFF (Step S208: No), the CPU 11 causes the process to proceed to Step S216.

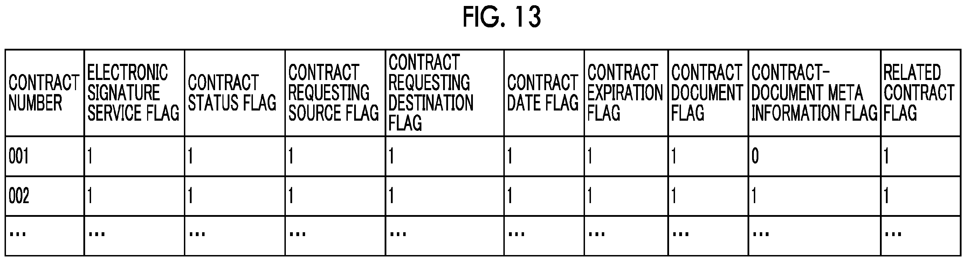

In Step S210, the CPU 11 acquires an item sharing flag. The CPU 11 causes the process to proceed to Step S212. Here, the item sharing flag is a flag for determining whether or not to share each item value in the contract information with the contract requesting destination. By sharing each item value in the contract information, the user as the contract requesting destination can use the corresponding item as the extension information. The item sharing flag is a flag that can be set by the contract requesting source. A specific example of the item sharing flag will be described later in Fig. 13.

In Step S212, the CPU 11 determines whether or not the item sharing flag indicates ON. In a case where it is determined that the item sharing flag indicates ON (Step S212: Yes), the CPU 11 causes the process to proceed to Step S214. In a case where it is determined that the item sharing flag indicates OFF (Step S212: No), the CPU 11 causes the process to proceed to Step S216.

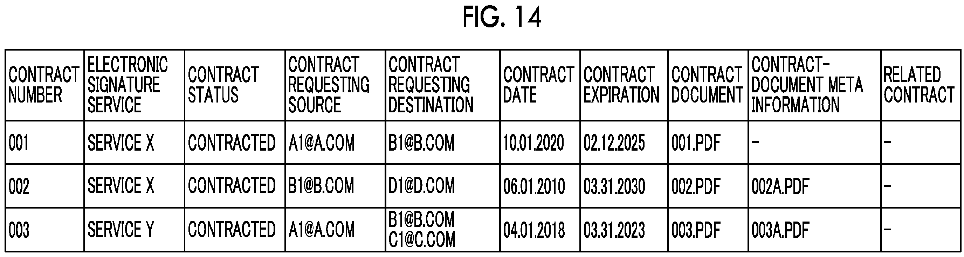

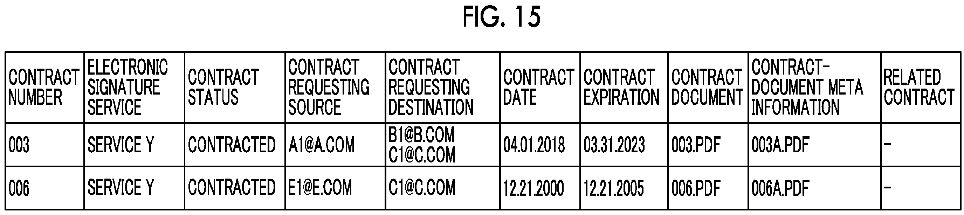

In Step S214, the CPU 11 adds each item value to the extension information. That is, in a case where the item sharing flag indicates ON, the CPU 11 adds the contract information corresponding to the item sharing flag, to the extension information. The CPU 11 causes the process to proceed to Step S216. The process of adding each item value to the extension information will be described later in Figs. 14 and 15.

In Step S216, the CPU 11 acquires the contract information in which the user is the contract requesting source. The CPU 11 causes the process to proceed to Step S218.

In Step S218, the CPU 11 adds the contract information to the extension information. The CPU 11 causes the process to proceed to Step S220. The process of adding the contract information to the extension information will be described later in Figs. 14 and 15.

In Step S220, the CPU 11 determines whether or not the user loop process is ended. In a case where the iterative process is performed for all the users, the CPU 11 ends the process of creating the extension information. In a case where the iterative process is not performed for all users, the CPU 11 causes the process to proceed to Step S202.

Fig. 11 is a flowchart illustrating a flow of a process of allowing use of the extension information of the contract management apparatus 10 according to the first exemplary embodiment. The CPU 11 reads a processing program for allowing use of the extension information from the ROM 12 or the storage 14, and expands the program into the RAM 13, and thus the process of allowing use of the extension information is performed.

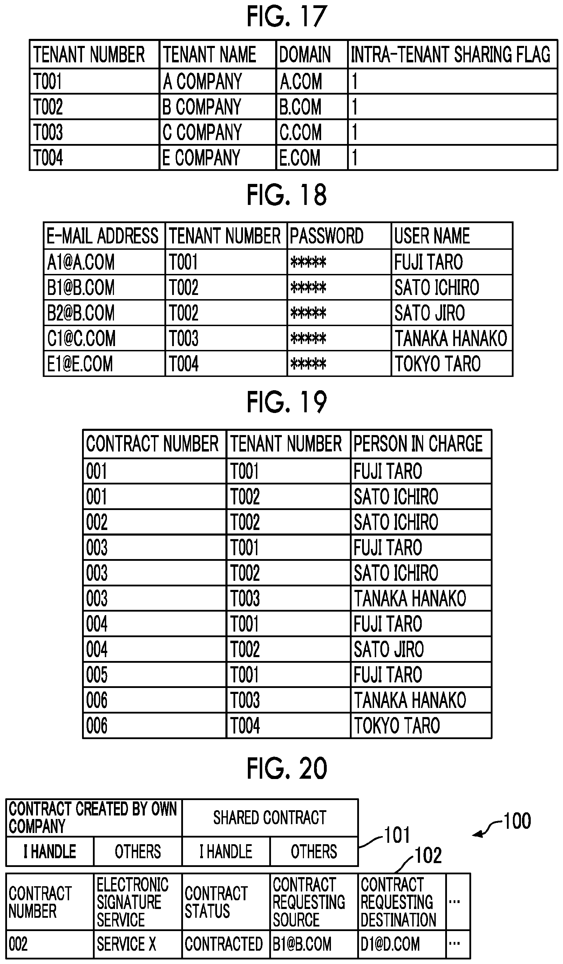

The contract management apparatus 10 has a user registration function. User registration will be described later in Fig. 18.

In Step S302, the CPU 11 accepts the login by the second user 95. The CPU 11 uses an E-mail address for authentication, as a login process. For example, the second user 95 logs in using the E-mail address included in the contract information and the preset password. The CPU 11 may use the identification information included in the contract information for the authentication instead of the E-mail address. The identification information included in the contract information is, for example, a telephone number, an address, or a name. A specific example of the E-mail address and the password will be described later in Fig. 18. The CPU 11 causes the process to proceed to Step S304.

In Step S304, the CPU 11 receives the request of the extension information by the second user 95. The CPU 11 causes the process to proceed to Step S306.

In Step S306, the CPU 11 acquires the extension information. The CPU 11 causes the process to proceed to Step S308.

In Step S308, the CPU 11 allows the second user 95 to use the extension information. That is, the CPU 11 allows use of the extension information in a case where the E-mail address used for the authentication coincides with an E-mail address of the second user 95, which is included in the contract information. In a case where a plurality of E-mail addresses are included in the contract information, in a case where at least one of the above E-mail addresses coincides with the E-mail address of the second user, the CPU allows use of the extension information. For example, the CPU 11 transmits the extension information to the second user 95 by E-mail. For example, the CPU 11 allows the second user 95 to download the extension information. For example, the CPU 11 causes the display unit 16 to display an extension information view described later with reference to Figs. 14 and 15 as the extension information for the second user 95. The CPU 11 causes the display unit 16 to display the extension information by a process which will be described later in Fig. 16. The CPU 11 ends the process of allowing use of the extension information.

Fig. 12 is a diagram illustrating an example of the common table used for contract management of the contract management apparatus 10 according to the first exemplary embodiment. The common table is a table in which contract information is stored. The common table includes a contract number column, an electronic signature service column, a contract status column, a contract requesting source column, a contract requesting destination column, a contract date column, a contract expiration column, a contract document column, a contract-document meta information column, a related contract column, and a contract sharing flag column.

For example, the contract management apparatus 10 acquires contract information having a contract number of 001 from a service X being the electronic signature service 7, by using the authentication information of a user having A1@A. com. Then, the contract management apparatus stores the acquired contract information in the common table. For example, the contract management apparatus 10 acquires contract information having a contract number of 002 from the service X being the electronic signature service 7, by using the authentication information of a user having B1@B.com. Then, the contract management apparatus stores the acquired contract information in the common table.

The contract number acquired from the electronic signature service 7 is stored in the contract number column. The contract number is a number for specifying the contract in the electronic signature service 7. For example, "001" is stored in the contract number column.

The contract management apparatus 10 stores information for specifying the electronic signature service 7 used in the contract, in the electronic signature service column. "Service X" is stored in the record having a contract number of "001".

The contract management apparatus 10 stores the contract status acquired from the electronic signature service 7, in the contract status column. "Contracted" is stored in the record having a contract number of 001.

The contract management apparatus 10 stores the contract requesting source acquired from the electronic signature service 7, in the contract requesting source column. "A1@A.COM" is stored in the record having a contract number of 001.

The contract management apparatus 10 stores the contract requesting destination acquired from the electronic signature service 7, in the contract requesting destination column. "B1@B.COM" is stored in the record having a contract number of 001.

The contract management apparatus 10 stores the contract date acquired from the electronic signature service 7, in the contract date column. "2020.10.01" is stored in the record having a contract number of 001.

The contract management apparatus 10 stores the contract expiration acquired from the electronic signature service 7, in the contract expiration column. "2025.02.12" is stored in the record having a contract number of 001.

The contract management apparatus 10 stores the contract document acquired from the electronic signature service 7, in the contract document column. "001.PDF" is stored in the record having a contract number of 001. A path of the contract document storage 30 in which the contract document 75 is stored may be stored in the contract document column.

The contract management apparatus 10 stores the contract-document meta information acquired from the electronic signature service 7 in the contract-document meta information column. "001A.PDF" is stored in the record having a contract number of 001. In a case where the contract-document meta information has a file format, the path of the contract document storage 30 in which the contract-document meta information is stored may be stored in the contract-document meta information column.

The contract management apparatus 10 stores information for specifying the related contract in the related contract column. The related contract is, for example, a contract of the renewal source of the contract or a contract of the duplication source of the contract text. For example, in a case where contract information of the related contract is included in the contract information, the contract management apparatus 10 stores the contract number of the related contract in the related contract column. The contract management apparatus 10 may receive the input of the related contract column, for example, through a predetermined screen.

The contract management apparatus 10 stores the contract sharing flag in the contract sharing flag column. The contract sharing flag is a flag for determining whether or not to share a record. In a case where the contract sharing flag is 1, the contract management apparatus 10 allows the contract requesting destination to use the record. "1" is stored in the record having a contract number of 001. As described above, for each contract, it is possible to designate whether or not the contract requesting source shares the extension information of the contract with the contract requesting destination. The designation may be performed by the user as the contract requesting source, that is, the first user 90 with the contract management apparatus 10 through a predetermined screen. As will be described later in Fig. 13, it is possible to designate a range in which the information is shared with the contract requesting destination for the contents of each contract.

As described above, the contract management apparatus 10 acquires the contract information regarding the contract from the first user 90 for the second user 95 by using the authentication information of the first user 90, and stores the contract information in the common table. For example, in the contract information having a contract number of 001, the user of A1@A.com corresponds to the first user 90, and the user of B1@B.com corresponds to the second user 95.

Fig. 13 is a diagram illustrating an example of the item sharing table used for the contract management of the contract management apparatus 10 according to the first exemplary embodiment. The item sharing table is a table that is updated by designating the range of the extension information shared by the first user 90 with the second user 95. For example, the first user 90 can designate the range of the extension information shared with the second user 95 on the contract management apparatus 10 through a predetermined screen. The item sharing table has a flag corresponding to each of the columns in the common table. That is, the item sharing table includes a contract number column, an electronic signature service flag column, a contract status flag column, a contract requesting source flag column, a contract requesting destination flag column, a contract date flag column, a contract expiration flag column, a contract document flag column, and a contract-document meta information flag column, and a related contract flag column.

Each of the flag columns is a flag for determining whether or not to share the value stored in the corresponding column in the common table. In a case where the flag indicates ON, the value of the corresponding column in the common table is displayed in the extension information view described later with reference to Figs. 14 and 15. That is, the contract management apparatus 10 displays the contract information in the range designated by the first user 90, in the extension information view of the second user 95.

For example, in the record having a contract number of 001, the contract-document meta information flag indicates 0, and various other flags indicate 1.

Figs. 14 and 15 are diagrams illustrating the example of the extension information view used for the contract management by the contract management apparatus 10 according to the first exemplary embodiment. The extension information view is a view that displays the extension information. That is, in the extension information view, in a case where the flag of the item sharing table indicates ON, the corresponding value in the common table is displayed in the extension information view for each contract number.

The extension information view is a view created for each user. That is, the contract management apparatus 10 creates the extension information view for each user who is the contract requesting source or the contract requesting destination.

Fig. 14 is a diagram illustrating an example of the extension information view for the user having an E-mail address of B1@B.com.

In Fig. 14, records having a contract number of 001, a contract number of 002, and a contract number of 003 are displayed. The value of the contract-document meta information for the contract number of 001 is not displayed.

That is, the contract management apparatus 10 displays values for the contract number of 001, the contract number of 002, and the contract number of 003, in which the contract requesting source or the contract requesting destination is B1@B.com, from the common table in the extension information view.

The value of the contract-document meta information having a contract number of 001 is not displayed. This is because the contract-document meta information flag for the contract number of 001 in the item sharing table indicates OFF.

Fig. 15 is a diagram illustrating an example of the extension information view for the user having an E-mail address of C1@C.com.

In Fig. 15, records having a contract number of 003 and a contract number of 006 are displayed.

That is, the contract management apparatus 10 displays values for the contract number of 003 and the contract number of 006, in which the contract requesting source or the contract requesting destination is C1@C.com, from the common table in the extension information view.

Here, the contract requesting source for the contract number of 003 is A1@A.com, and the contract requesting source for the contract number of 006 is E1@E.com. That is, the contract management apparatus 10 displays a plurality of pieces of contract information having different contract requesting sources, in the extension information view. In other words, in a case where the user of A1@A.com is set as the first user 90, the user of C1@C.com is set as the second user 95, and the user of E1@E. com is set as a third user, the contract management apparatus 10 displays the extension information of the second user 95 among pieces of the contract information in which the first user 90 or the third user is set as the contract requesting source, in the extension information view. The third user is a user who is a contract requesting source of a contract different from the contract with the first user 90.

The contract management apparatus 10 does not display the contract information having a contract number of 005, in the extension information view. This is because the contract sharing flag having a contract number of 005 in the common table indicates OFF.

### [Second Exemplary Embodiment]

Next, a second exemplary embodiment will be described. The second exemplary embodiment is an example of the process of allowing use of the extension information in the first exemplary embodiment. In the first exemplary embodiment, a second user 95 can use a contract related as a user of a contract requesting destination, in an extension information view as illustrated in Fig. 14. In the second exemplary embodiment, the second user 95 can use the contract related as the user of the contract requesting destination, and can also classify and use contracts created by the own company and contracts handled by the second user. The hardware configuration in the second exemplary embodiment is identical to the hardware configuration in the first exemplary embodiment. The parts of the components and operation similar to parts in the first exemplary embodiment are denoted by the identical reference signs, and repetitive description will be omitted.

Fig. 16 is a flowchart illustrating a flow of a process of displaying extension information by a contract management apparatus 10 according to the second exemplary embodiment. A CPU 11 reads a processing program for displaying the extension information from a ROM 12 or a storage 14, and expands the program into a RAM 13, and thus the process of displaying the extension information is performed.

In Step S322, the CPU 11 accepts the login by the second user 95. The CPU 11 causes the process to proceed to Step S324.

In Step S324, the CPU 11 acquires tenant information of the second user 95. The CPU 11 causes the process to proceed to Step S326.

Here, the tenant information is information on a tenant to which the user belongs. The tenant information includes an intra-tenant sharing flag. The intra-tenant sharing flag is a flag for determining whether or not to share contract information within the tenant. The intra-tenant sharing flag is a flag that can be set for each tenant. A specific example of the intra-tenant sharing flag will be described later in Fig. 17.

In Step S326, the CPU 11 acquires the extension information of a tenant user. The tenant user is one or a plurality of users belonging to the identical tenant. The CPU 11 causes the process to proceed to Step S328.

In Step S328, the CPU 11 determines whether or not the contract requesting source is the second user 95. In a case where it is determined that the contract requesting source is not the second user 95 (Step S328: No), the CPU 11 causes the process to proceed to Step S330. In a case where it is determined that the contract requesting source is the second user 95 (Step S328: Yes), the CPU 11 causes the process to proceed to Step S334.

In Step S330, the CPU 11 determines whether or not the intra-tenant sharing flag indicates ON. In a case where it is determined that the intra-tenant sharing flag indicates ON (Step S330: Yes), the CPU 11 causes the process to proceed to Step S332. In a case where it is determined that the intra-tenant sharing flag indicates OFF (Step S330: No), the CPU 11 ends the process of displaying the extension information.

In Step S332, the CPU 11 determines whether or not the contract requesting source is the tenant user. In a case where it is determined that the contract requesting source is the tenant user (Step S332: Yes), the CPU 11 causes the process to proceed to Step S334. In a case where it is determined that the contract requesting source is not the tenant user (Step S332: No), the CPU 11 causes the process to proceed to Step S340.

In Step S334, the CPU 11 determines whether or not a person in charge is the second user 95. The person in charge is a person handling the contract determined for each tenant. A specific example of the person in charge will be described later in Fig. 19. In a case where it is determined that the person in charge is the second user 95 (Step S334: Yes), the CPU 11 causes the process to proceed to Step S336. In a case where it is determined that the person in charge is not the second user 95 (Step S334: No), the CPU 11 causes the process to proceed to Step S338.

In Step S336, the CPU 11 performs display in "I handle" of "contract created by the own company". The CPU 11 ends the process of displaying the extension information.

In Step S338, the CPU 11 performs display in "others" of "contract created by the own company". The CPU 11 ends the process of displaying the extension information.

In Step S340, the CPU 11 determines whether or not the person in charge is the second user 95. In a case where it is determined that the person in charge is the second user 95 (Step S340: Yes), the CPU 11 causes the process to proceed to Step S342. In a case where it is determined that the person in charge is not the second user 95 (Step S340: No), the CPU 11 causes the process to proceed to Step S344.

In Step S342, the CPU 11 performs display in "I handle" of "shared contract". The CPU 11 ends the process of displaying the extension information.

In Step S344, the CPU 11 performs display in "others" of "shared contract". The CPU 11 ends the process of displaying the extension information.

Fig. 17 is a diagram illustrating an example of a tenant table used for the contract management of the contract management apparatus according to the second exemplary embodiment. The tenant table is a table in which tenant information is stored. The tenant table is updated every time a new tenant is created or the tenant is updated. The tenant table has a tenant number column, a tenant name column, a domain column, and an intra-tenant sharing flag column. For example, the contract management apparatus 10 receives the input of the tenant information by the user at the time of user registration and stores the tenant information in the tenant table.

The tenant number column stores the tenant number for identifying the tenant. For example, "T001" is stored in the tenant number column.

The tenant name column stores the tenant name. "Company A" is stored in the record in which the tenant number column is T001.

The domain column stores the unique domain of the E-mail address owned by the tenant. "A.COM" is stored in the record in which the tenant number column is T001. A plurality of unique domains may be stored in one tenant.

The intra-tenant sharing flag column stores a flag for determining whether or not to share contract information within the tenant. "1" is stored in the record in which the tenant number column is T001.

Fig. 18 is a diagram illustrating an example of a user table used for the contract management of the contract management apparatus according to the second exemplary embodiment. The user table is a table in which, in a case where a user is registered, user information is stored. The user table has an E-mail address column, a tenant number column, a password column, and a user name column.

The E-mail address column stores the E-mail address of the user. For example, "A1@A.COM" is stored in the E-mail address column.

The tenant number column stores the tenant number to which the user belongs. "T001" is stored in the record having an E-mail address of A1@A.com. In a case where the domain of the E-mail address coincides with the domain of the tenant, the contract management apparatus 10 causes the user to belong to such a tenant. That is, users having a common E-mail address domain belong to the identical tenant.

The password column stores a password for logging in to the contract management apparatus 10.

The user name column stores a user name. "Fuji Taro" is stored in the record having an E-mail address of A1@A.com.

A user of D1@D.com is not registered because D1@D.com is not provided in the user table. Therefore, it is not possible for the user of D1@D.com to log in to the contract management apparatus 10, and thus it is not possible to use the extension information.

Fig. 19 is a diagram illustrating an example of a tenant contract table used for the contract management by the contract management apparatus 10 according to the second exemplary embodiment. In the tenant contract table, a record is created for each pair of contract and tenant. The tenant contract table has a contract number column, a tenant number column, and a person-in-charge column.

The person in charge is stored in the person-in-charge column. "Fuji Taro" is stored in the person-in-charge column in the record in which the contract number is 001 and the tenant number is T001. Information for identifying the user, such as the E-mail address, may be stored in the person-in-charge column.

Figs. 20 to 22 are examples of an extension information display screen 100 displayed in the display unit 16 of the contract management apparatus 10 according to the second exemplary embodiment. The extension information display screen 100 has a tab 101 and an extension information display region 102.

As illustrated in Fig. 20, the tab 101 has "contract created by the own company" and "shared contract" as a first category. The tab 101 has "I handle" and "others" as a second category. The contract management apparatus 10 receives the selection of the first category and the second category by the user.

As illustrated in Fig. 20, in the extension information display region 102, extension information is displayed in conjunction with the first category and the second category selected on the tab 101. The extension information display region 102 includes, for example, a contract number item, an electronic signature service item, a contract status item, a contract requesting source item, a contract requesting destination item, and the like.

The following description will be made as an example in which the user having an E-mail address of B1@B.com logs in to the contract management apparatus 10. A user of B2@B.com belongs to a tenant having a tenant number of T002, to which the user of B1@B.com belongs.

Fig. 20 illustrates an example in which "contract created by the own company" and "I handle" are selected on the tab 101. The contract management apparatus 10 displays the extension information having contract number of 002 in the extension information display region.

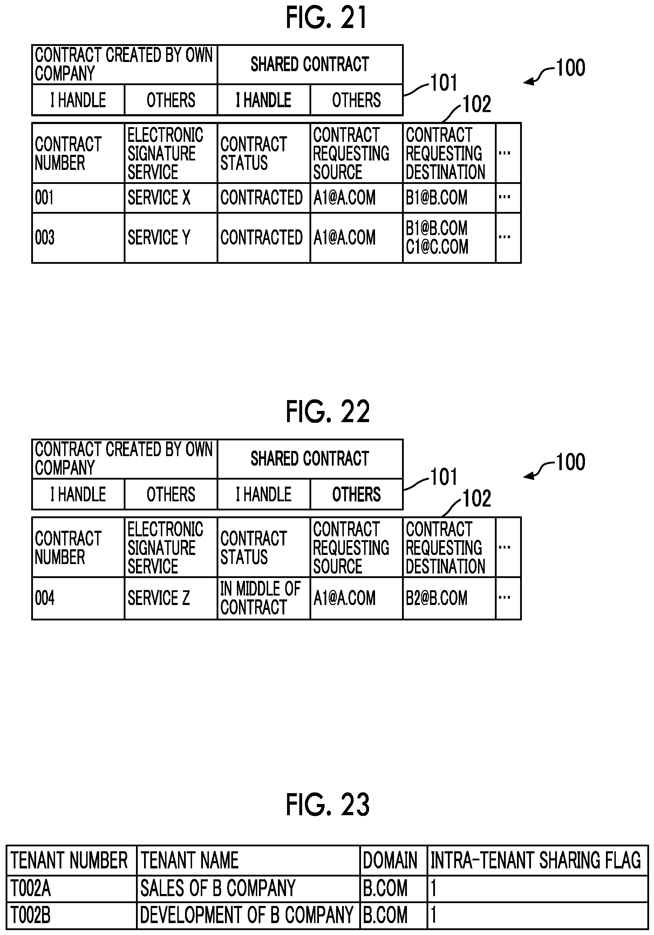

Fig. 21 illustrates an example in which "shared contract" and "I handle" are selected on the tab 101. The contract management apparatus 10 displays the extension information having a contract number of 001 and a contract number of 003, in the extension information display region.

Fig. 22 illustrates an example in which "shared contract" and "others" are selected on the tab 101. The contract management apparatus 10 displays the extension information having contract number of 004 in the extension information display region. That is, the contract management apparatus 10 allows the user of B1@B.com being an E-mail address of a domain identical to the domain of the E-mail address of the user, which is B2@B.com to use the extension information of the user of B2@B.com. In other words, in a case where the user of B2@B.com is set as the second user 95, the contract management apparatus 10 allows the user having an E-mail address of a domain identical to the domain of the E-mail address of the second user 95 to use the extension information of the second user 95.

### (Modification Examples)

Hitherto, the contract management apparatus 10 in the first exemplary embodiment and the second exemplary embodiment has been described. However, the present disclosure is not limited to the above exemplary embodiments. Various improvements or modifications can be made.

In Step S114 in Fig. 7, the CPU 11 stores the contract information and the like regardless of whether or not the E-mail address of the second user 95 included in the contract information is provided in the user table. This is similarly applied to Step S128 in Fig. 8 and Step S138 in Fig. 9. Thus, contract information regarding a contract before the second user 95 is not registered yet is also accumulated. For example, contract information in which the contract requesting destination is D1@D. com and the contract number is 002 is stored in the common table in Fig. 12. The user of D1@D.com is not registered because D1@D.com is not provided in the user table in Fig. 18. In a case where the user of D1@D.com has been registered, the user of D1@D.com can use the contract having a contract number of 002.

Regarding Step S324 in Fig. 16, the CPU 11 may acquire tenant information having a domain identical to the domain of the mail address of the second user 95. A case where the tenant table has the contents illustrated in Fig. 23 will be described below. Fig. 23 illustrates an example of the tenant table. Both the domains of the tenant number of T002A and the tenant number of T002B are B.com. In a case where the logged-in user is the user of B1@B.com, the CPU 11 acquires tenant information of the tenant number of T002A and the tenant number of T002B. With Step S326, the CPU acquires the extension information of the user having a tenant number of T002A and the extension information of the user having a tenant number of T002B. That is, the contract management apparatus 10 allows the user having an E-mail address of a domain identical to the domain of the E-mail address of the contract requesting destination to use the extension information.

The contract management apparatus 10 in the above exemplary embodiments may limit the range of the extension information by an access authority of the database instead of various flags. The access authority of the database is an authority to control an access such as viewing for each user, in units of tables, records, or columns. That is, instead of the contract sharing flag, the access authority is assigned to each user for the records in the common table. For example, in Fig. 12, the contract management apparatus 10 assigns the access authority to the user of A1@A.com and the user of B1@B.com in the record having a contract number of 001.

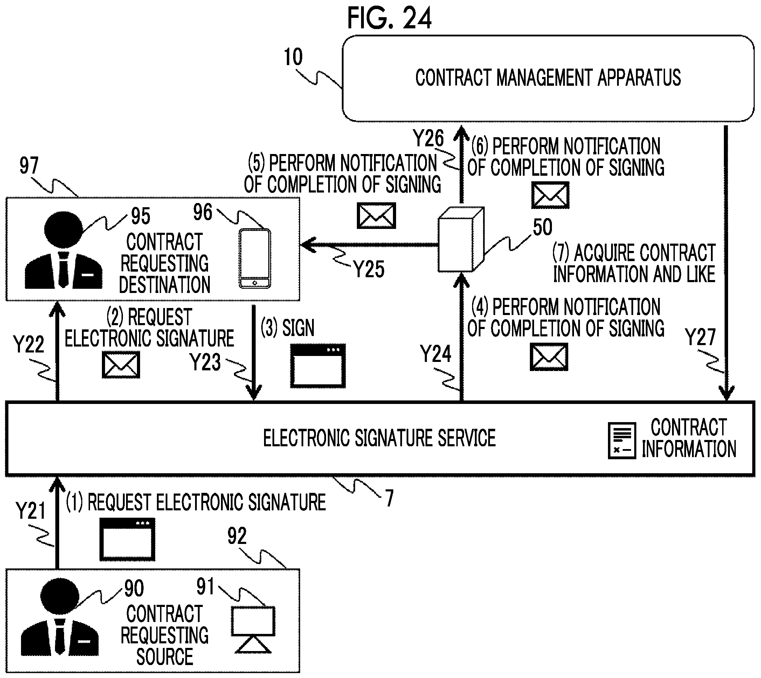

Fig. 24 is a schematic diagram illustrating a flow of the process of acquiring the contract information and the like from a URL of the contract management apparatus 10 according to the above exemplary embodiments.

The contract management apparatus 10 according to the above exemplary embodiments uses the authentication information of the first user 90 to acquire the contract information and the like from the electronic signature service 7 by the API.

The contract management apparatus 10 illustrated in Fig. 24 acquires the contract information and the like from the URL described in the E-mail without using the API.

Thus, the contract management apparatus 10 can acquire the information that can be acquired by the second user 95 through the electronic signature service 7 without using the authentication information of the first user 90.

The flow of acquiring the contract information and the like from the URL described in the E-mail for a notification of the completion of the signing will be described in order of processes indicated by arrows Y21 to Y27.

The arrow Y21 indicates a flow in which the first user 90 requests a contract with the second user 95 from the electronic signature service 7 by using the terminal device 91.

The arrow Y22 indicates a flow of a process in which the electronic signature service 7 requests the second user 95 to sign.

The arrow Y23 indicates a flow of a process in which the second user 95 signs on the electronic signature service 7 by using the terminal device 96.

The arrow Y24 indicates a flow of a process in which the electronic signature service 7 transmits an E-mail for a notification of the completion of the signing, to the mail server 50. That is, the electronic signature service 7 transmits an E-mail to the mail server 50.

The arrow Y25 indicates a flow of a process in which the mail server 50 transfers an E-mail for a notification of the completion of the signing, to the second user 95.

The arrow Y26 indicates a flow of a process in which the mail server 50 transfers an E-mail for a notification of the completion of the signing, to the contract management apparatus 10. That is, the contract management apparatus 10 acquires the E-mail from the mail server 50 by the POP or the like.

The arrow Y27 indicates a flow in which the contract management apparatus 10 acquires the contract information and the like from the electronic signature service 7. That is, the contract management apparatus 10 acquires the URL described in the E-mail. Then, the contract management apparatus 10 acquires the contract information and the like from the WEB site.

The above processes can also be realized by a dedicated hardware circuit. In this case, the above processes may be performed by one type of hardware or a plurality of types of hardware.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the program for operating the contract management apparatus 10 may be provided by a computer-readable recording medium such as a universal serial bus (USB) memory, a flexible disk, a CD-ROM (Compact Disc Read Only Memory) , or may be provided online via a network such as the Internet. In this case, the program recorded in the computer-readable recording medium is normally transferred into a memory, a storage, or the like and then stored. Further, the program may be provided as independent application software, or may be incorporated into the software of each device as a function of the contract management apparatus 10, for example.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 1:: contract management system
- 7:: electronic signature service
- 10:: contract management apparatus
- 20:: web server
- 30:: contract document storage
- 40:: contract management database
- 50:: mail server
- 75:: contract document
- 76:: signature region
- 90:: first user
- 91:: terminal device
- 92:: company a
- 95:: second user
- 96:: terminal device
- 97:: company b
- 100:: extension information display screen
- 101:: tab
- 102:: extension information display region

## Claims

1. An information processing apparatus comprising:
a processor configured to:
use authentication information of a first user for using an electronic signature service to acquire contract information regarding a contract of the first user being a contract requesting source for a second user being a contract requesting destination from the electronic signature service; and
include extension information other than information acquirable by the second user through the electronic signature service in the acquired contract information to allow the second user to use the extension information.

2. The information processing apparatus according to claim 1, wherein the processor is configured to:
accumulate the acquired contract information, and
include the extension information in the accumulated contract information to allow the second user to use the extension information.

3. The information processing apparatus according to claim 2, wherein the processor is configured to:
use authentication information of a third user being a contract requesting source of another contract to further acquire contract information regarding a contract of the third user for the second user, from the electronic signature service, and
include the extension information in the contract information in which the first user or the third user is set as the contract requesting source, to allow the second user to use the extension information.

4. The information processing apparatus according to any one of claims 1 to 3, wherein the processor is configured to:
allow the second user to use the extension information in a range designated by the first user.

5. The information processing apparatus according to any one of claims 1 to 4, wherein the processor is configured to:
authenticate a user with identification information, and
enable use of extension information of contract information in which the identification information used in the authentication is included as identification information of the second user.

6. The information processing apparatus according to claim 5,
wherein the identification information is an E-mail address of the user, and
the processor is configured to: enable use of extension information of contract information in which the E-mail address is included as an E-mail address of the second user.

7. The information processing apparatus according to claim 6, wherein the processor is configured to:
allow a user having an E-mail address having a domain identical to a domain of the E-mail address of the second user to use the extension information.

8. An information processing program causing a computer to execute a process comprising:
using authentication information of a first user for using an electronic signature service to acquire contract information regarding a contract of the first user being a contract requesting source for a second user being a contract requesting destination from the electronic signature service; and
including extension information other than information acquirable by the second user through the electronic signature service in the acquired contract information to allow the second user to use the extension information.

9. An information processing method comprising:
using authentication information of a first user for using an electronic signature service to acquire contract information regarding a contract of the first user being a contract requesting source for a second user being a contract requesting destination from the electronic signature service; and
including extension information other than information acquirable by the second user through the electronic signature service in the acquired contract information to allow the second user to use the extension information.
